(19) **Europäisches Patentamt**
**European Patent Office**
**Office européen des brevets**

(11) **EP 4 163 588 A1**

(12) **EUROPEAN PATENT APPLICATION**

(43) Date of publication:
**12.04.2023 Bulletin 2023/15**

(21) Application number: **21382907.0**

(22) Date of filing: **08.10.2021**

(51) International Patent Classification (IPC):
***G01B 15/02*** *(2006.01)* ***B29C 48/92*** *(2019.01)*

(52) Cooperative Patent Classification (CPC):
**G01B 15/025; B21C 23/00; B30B 11/005; B30B 11/22;** B29C 48/92

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **Tech Pro Packag S.L.**
  **01470 Amurrio (ES)**
- **Ingenet Automatizacion, S.L.**
  **48410 Orozko (ES)**

(72) Inventors:
- **GOMEZ ZUBICARAY, Unai**
  **01400 LAUDIO (ES)**
- **UDAETA SAN MARTIN, Xabier**
  **OROZKO (ES)**
- **SOLORZANO QUIJANO, Eusebio**
  **Valladolid (ES)**

(74) Representative: **Igartua, Ismael**
**Galbaian S. Coop.**
**Garaia Parke Teknologikoa**
**Goiru Kalea 1**
**20500 Arrasate-Mondragón (ES)**

(54) **PROCESS AND INSTALLATION FOR MANUFACTURING AND INSPECTING METAL CONTAINERS**

(57)     Method and installation for manufacturing and inspecting metal containers, which method comprises supplying a metal disk (1), extruding the metal disk (1) to form a metal container (10) comprising a cylindrical body with a side wall, a base, and an open end opposite the base, and inspecting the metal container (10) to determine the thickness of the base, wherein the inspection comprises arranging the metal container (10) between an X-ray emitter (20) and an X-ray receiver (21), emitting X-rays from the X-ray emitter (20) to the X-ray receiver (21) through the base of the metal container (10), with part of the intensity of the X-rays being absorbed by the base of the metal container (10), and determining the thickness of the base of the metal container (10) based on the intensity of the X-rays absorbed by the base.

FIG. 3

EP 4 163 588 A1

**EP 4 163 588 A1**

## Description

TECHNICAL FIELD

The present invention relates to a method and installation for manufacturing and inspecting metal containers.

PRIOR ART

Metal containers for containing beverages, food, or cosmetic and pharmaceutical products such as, for example, beverage cans, aerosols for deodorants, etc., are known. Metal containers of this type are manufactured in continuous manufacturing lines from a metal disk, generally an aluminum or steel disk, which is subjected to hot extrusion in an extrusion press in a process called DWI "*Draw and Wall Iron*".

In this manner, the metal disk is first extruded in the extrusion press to form a metal container comprising a cylindrical body with a side wall, a base, and an open end opposite the base. In a subsequent phase, the cylindrical body of the container is deformed in a neck forming machine (necking machine) to form a neck at its open end, and finally the container is completed entirely by, for example, in the case of aerosols, placing a sprayer in the neck of the container. Furthermore, the manufacturing process comprises other operations of washing, applying linings on, painting, and screen printing the container, among others.

Technological progress in metal transformation processes has led to containers that have increasingly smaller thicknesses, so it is essential to control container thickness in order to detect the appearance of defects which may compromise the structural integrity of the container.

Generally, container inspection is performed in a machine external to the container manufacturing line once the container is completed. Various dimensional parameters of the container are controlled, among them, the side walls, or in the case of aerosols, the attachment between the neck of the container and the sprayer, are inspected using measurement sensors such as, for example, lasers. Nevertheless, controlling the thickness of the base of the container is particularly relevant because this parameter is directly related with the metal disk extrusion process that takes place at the beginning of the metal transformation process, i.e., the thickness of the base of the container is essentially defined in the extrusion press, and any defect in the thickness of the base has a bearing on the entire line, with resources being wasted in manufacturing a container that will be rejected.

EP3404357A1 shows a method which allows the thickness of the base of a metal container to be determined on the container manufacturing line itself, whereby it is possible to find out whether the container thickness is erroneous before manufacture of the container is completed. The method comprises sending a first electromagnetic radiation beam from a first measurement sensor striking the inner face of the base of the container according to a horizontal line and sending a second electromagnetic radiation beam from a second measurement sensor, which is opposite the first beam, striking the outer face of the base of the container according to another horizontal line, with the horizontal lines of the beams having to coincide with one another. The distance between the measurement sensors and the base of the container is then calculated, and the thickness of the base of the container is determined by comparing the distances measured by the two measurement sensors.

DISCLOSURE OF THE INVENTION

The object of the invention is to provide a method and installation for manufacturing and inspecting metal containers as defined in the claims.

One aspect of the invention relates to a method for manufacturing and inspecting metal containers, which comprises supplying a metal disk, extruding the metal disk to form a metal container comprising a cylindrical body with a side wall, a base, and an open end opposite the base, and inspecting the metal container to determine the thickness of the base, wherein the inspection comprises arranging the metal container between an X-ray emitter and an X-ray receiver, emitting X-rays from the X-ray emitter to the X-ray receiver through the base of the metal container, with part of the intensity of the X-rays being absorbed by the base of the metal container, and determining the thickness of the base of the metal container based on the intensity of the X-rays absorbed by the base.

Another aspect of the invention relates to an installation for manufacturing and inspecting metal containers, comprising a feeder for supplying metal disks, an extrusion press for extruding the metal disks and forming metal containers, wherein each metal container comprises a cylindrical body with a side wall, a base, and an open end opposite the base, and an inspection unit for inspecting the metal containers and determining the thickness of the base of the metal containers, and wherein the inspection unit comprises an X-ray emitter and an X-ray receiver for emitting X-rays from the X-ray emitter to the X-ray receiver through the base of the metal containers, with part of the intensity of the X-rays being absorbed by the base of the metal containers, and a control unit configured for determining the thickness of the base of the metal containers based on the intensity of the X-rays absorbed by the base.

The thickness of the base of the metal container can vary in any area of the base for various reasons, for example, due to defects in the starting material of the metal disk, due to a misalignment of the extruder shaft of the extrusion press extruding the metal disk, due to expansions or shrinkages of the extruder shaft as a result of the press temperature, among others. Inspection with X-rays allows the thickness at any point of the base of the container to be determined, since the X-ray radiation allows irradiating the entire base of the container, whereas the measurement sensors of EP3404357A1, given the nature of the laser beam, only allow controlling the thickness in a horizontal line projected on the base. Furthermore, the measurement sensors of EP3404357A1 must be perfectly aligned so that the lines projected on the two faces of the base of the container coincide, and any misalignment of the measurement sensors, or any vibration of the containers during conveyance, can negatively affect the measurement; however, inspection with X-rays obtains suitable measurements regardless of the occurrence of slight misalignments between the X-ray emission source and the X-ray receiver, and regardless of the vibration of the containers during conveyance when they are being measured. Other than this, like EP3404357A1, thickness is determined on the container manufacturing line itself and thickness control in a machine external to the manufacturing line is not required.

Additionally, inspection with X-rays also allows determining the circumference of the base of the metal container, as well as inspecting the molecular structure of the metal of the base to detect defects such as impurities, cracks, or incrustations which would cause cracks later on.

These and other advantages and features of the invention will become apparent in view of the figures and the detailed description of the invention.

DESCRIPTION OF THE DRAWINGS

Figure 1 shows a block diagram of an example of an installation for manufacturing metal containers.

Figure 2 shows a schematic example of the transformation of a metal disk into a metal container using an extruder of an extrusion press.

Figure 3 shows the location of the X-ray inspection unit arranged at the outlet of the extrusion press.

Figure 4 shows a preferred arrangement of the X-ray emitter and the X-ray receiver for emitting X-rays to the base of the container and receiving X-rays in the receiver.

Figure 5 shows a standard curve linking thickness values of the metal containers with intensity values of X-rays absorbed by the material of the containers.

Figure 6 shows XR images of the base of the metal containers measured on a transfer unit.

DETAILED DISCLOSURE OF THE INVENTION

The manufacture of metal containers, particularly aluminum or steel containers, for containing beverages, food, or cosmetic and pharmaceutical products (cans of beverages, aerosols, etc.), requires a process in which different machines 100 arranged in an installation for manufacturing metal containers 10 are used. Machines of different types can be used depending on the operations that must be performed to manufacture the container 10, and the machines can be arranged in different ways in the installation. In the installation, containers are processed continuously on a container manufacturing line.

The machines 100 are automatically connected by means of transfer units 112, such as linear conveyor belts, rotating carousels, or similar elements, which transfer the containers 10 from one machine 100 to another. The manufacturing line is a high-speed line, where the order of 200 containers can be processed per minute.

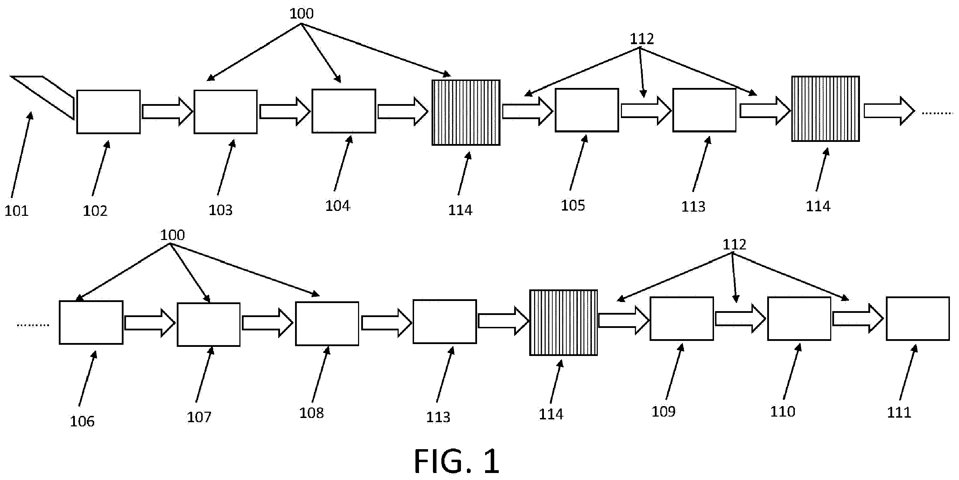

Figure 1 shows a block diagram of a non-limiting example of an installation for manufacturing metal containers. The installation comprises a feeder 101 for supplying metal disks 1, an extrusion press 102 for extruding the metal disks 1 and forming metal containers 10, a cutter 103 for trimming the length of the container 10, a washing and drying assembly 104 for cleaning the container 10 after extrusion, an interior varnishing machine 105 for applying a lining on the interior of the containers 10, a varnishing machine 106 for covering the outside of the container 10 before printing a design, a decorating machine 107 for printing the design on the container 10, a glazing machine 108 for externally covering the container 10 to protect the print, a neck forming machine 109 for forming the neck of the container 10, a crack detector 110 for detecting microcracks in any area of the completed container 10, and a packaging machine 111. The installation is completed with the transfer units 112 for transferring the containers 10 from one machine 100 to another, ovens and chillers 113 which dry and harden the various coatings applied on the container 10, and accumulators 114 which allow the accumulation of the containers 10 to enable synchronizing the speed of all the machines 100 of the installation. One oven 113 is arranged after the interior varnishing machine 105 followed by an accumulator 114 and another oven 113 is arranged after the glazing machine 108 followed by another accumulator 114. Another accumulator 114 is arranged after the washing and drying assembly 104.

Although the machines 100 can be arranged in different ways and different types of machines 100 can be used, every installation for manufacturing metal containers 10 comprises at the beginning of the installation a feeder 101 for supplying metal disks 1, and then an extrusion press 102 for extruding the metal disks 1 and forming metal containers 10 comprising a cylindrical body 11 with a side wall 12, a base 13, and an open end 14 opposite the base 13.

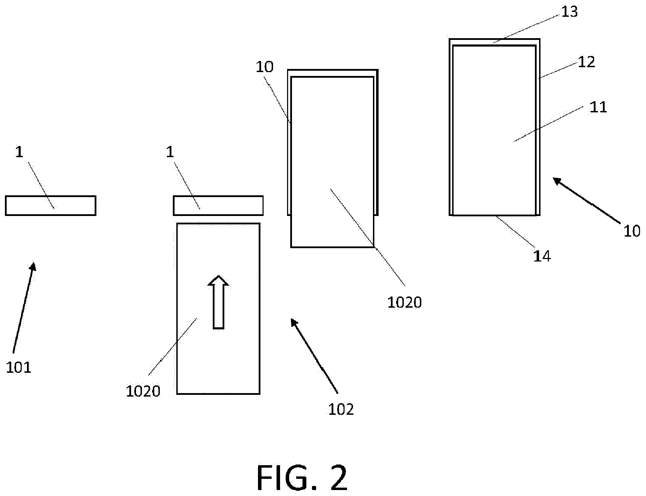

Figure 2 shows a schematic example of the transformation of a metal disk 1 into a container 10 by means of an extruder 1020 of the extrusion press 102 which forces the deformation of the material of the disk 1 and the transformation thereof into the container 10. The extrusion method is widely known and not described in greater detail.

The invention proposes a method for manufacturing and inspecting metal containers which comprises supplying a metal disk 1, extruding the metal disk 1 to form a metal container 10 comprising a cylindrical body 11 with a side wall 12, a base 13, and an open end 14 opposite the base 13, and inspecting the metal container 10 to determine the thickness of the base 13. The inspection comprises arranging the metal container 10 between an X-ray emitter 20 and an X-ray receiver 21, emitting X-rays from the X-ray emitter 20 to the X-ray receiver 21 through the base 13 of the container 10, with part of the intensity of the X-rays being absorbed by the base 13 of the container 10, and determining the thickness of the base 13 of the container 10 based on the intensity of the X-rays absorbed by the base 13.

The base 13 of the container 10 to be measured has a nominal thickness value of between 0.3 and 2 mm.

X-rays are a high-energy (ionizing) electromagnetic radiation the wavelength of which is between $10^{-9}$ m and $10^{-12}$ m. Based on its energetic nature, this radiation is capable of going through materials of a different nature and thickness.

The emitted X-rays have an essentially uniform intensity distribution before striking the container and photon absorption and scattering upon interacting with the material of the container give rise to an alteration in the X-rays, which contains information about the structures the X-rays go through. The intensity of the X-rays going through the material is attenuated depending on the thickness of said material, therefore the thickness of the material can be determined by recording the unabsorbed intensity.

X-ray absorption in a material is governed by the Beer-Lambert Law which allows knowing the values of the intensity transmitted by the material. As shown in the following equation, this Law indicates that transmitted radiation experiences an exponential decay as it goes through a material.

$$I = I_0 e^{-\mu t} \qquad\qquad [1]$$

where:

$I_0$ is the intensity of the X-rays emitted by the X-ray emitter,
$I$ is intensity of the X-rays received in the X-ray receiver,
$\mu$ is the absorption coefficient of the material of the base of the container, and
$t$ is the thickness of the material of the base of the container.

The invention therefore proposes inspecting the base 13 of the metal containers 10 using an X-ray inspection unit 200 which determines the thickness of the base 13 of the containers 10. The inspection unit 200 comprises an X-ray emitter 20, and an X-ray receiver 21 and can be placed at any point of the manufacturing line, for example, arranging the emitter 20 and the receiver 21 intercalated between one of the transfer units 112 transferring the containers 10 between the machines 100. The inspection unit 200 can also be arranged intercalated between two transfer units 112, where the inspection unit 200 can therefore be another one of the machines 100 of the installation, or the emitter 20 and the receiver 21 can even be arranged in one of the machines 100 already existing in the installation such as, for example, in the neck forming machine 109.

Nevertheless, and preferably, the inspection is performed after extruding the metal disk 1 when the metal container 10 is hot at a temperature comprised between 100 and 300°C. In other words, the inspection is performed at the outlet of the extrusion press 102, even more preferably in the transfer unit 112 transferring hot and freshly extruded containers 10 from the extrusion press 102 to the next machine 100 of the installation, for example, the cutter 113. In this manner, any container 10 which does not meet the thickness specifications can be disposed of before being processed in the next machines 100 of the installation. Given their nature, X-rays can be used for inspecting the container 10 in a hot condition, something which is not possible with measurement systems of another type such as, for example, the laser beam measurement sensors of document EP3404357A1, which cannot perform measurement in a hot condition because the heat radiated from the container prevents measuring with a laser beam.

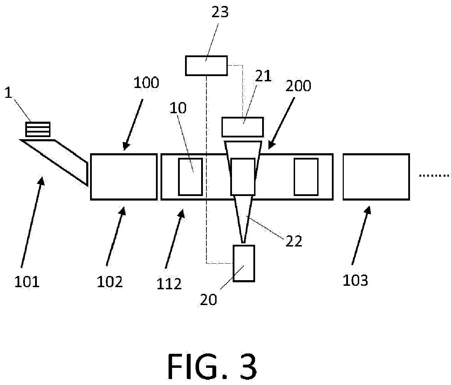

Figure 3 shows a schematic view of the preferred location of the inspection unit 200. The inspection unit 200 is arranged at the outlet of the extrusion press 102 when the containers 10 are hot at a temperature comprised between 100 and 300°C. The installation comprises a transfer unit 112 transferring freshly extruded containers 10 from the extrusion press 102 to the next machine 100 of the installation, specifically to the cutter 103, with the transfer unit being intercalated between the X-ray emitter 20 and the X-ray receiver 21. The transfer unit 112 is a conveyor belt conveying the containers 10 supported by their side wall 12, and the X-ray emitter 20 and the X-ray receiver 21 of the inspection unit 200 are arranged perpendicular to the forward movement of the conveyor belt.

Even more preferably, the method comprises determining adjustment parameters of the extrusion press 102 for extruding the metal disk 1 and forming the metal container 10, determining, by means of the inspection, the thickness of the base 13 of the container 10 extruded in the extrusion press 102, and modifying the adjustment parameters of the extrusion press 102 when the thickness 13 does not meet a given thickness value. This process of determining the thickness and modifying the adjustment parameters of the press is repeated until the thickness meets the given thickness value.

The modification of the adjustment parameters of the extrusion press 102 comprises at least modifying the position of the extruder 1020, wherein the position of the extruder 1020 is adjusted by moving the extruder forward or backward along its longitudinal axis with respect to the metal disk 1 to be extruded.

When initiating the process of manufacturing a metal container 10, the adjustment parameters of the extrusion press 102 are defined during the setting up of the extrusion press 102 to manufacture the cylindrical body 11 of the containers 10 from the metal disks 1. However, and until the suitable temperature is reached, many containers 10 will have to be rejected because the thickness does not meet the given thickness value. If the thickness of the base 13 of the container 10 does not meet the defined specifications, for example, the thickness being smaller, at least in an area of the base, than that specified, the container may become deformed, or even worse, crack, in a subsequent process of manufacturing the container or in a process of filling said container.

Conventionally, an operator manually adjusts the position of the extruder until the press starts to eject containers with the required thickness. The length of the extruder changes due to temperature, expanding when the temperature increases and shrinking when it cools down, for example, as a result of a line shutdown. For example, the extruder is a 500 mm long shaft which can expand or shrink by 0.5 to 1 mm, and this affects the thickness of the obtained containers. When the press starts up, and while it is getting up to the suitable temperature, the length of the extruder gradually changes, and the operator must manually modify the position of the extruder to obtain the required thickness of the container until the press acquires a stable temperature and therefore a stability in the thickness of the manufactured container is achieved. This manual adjustment may cause a significant number of rejections due to human errors and a lot of time wasted, however, measuring with X-rays at the press outlet by means of a closed loop control allows the press to be automatically adjusted, reducing the number of rejected containers and the time consumed.

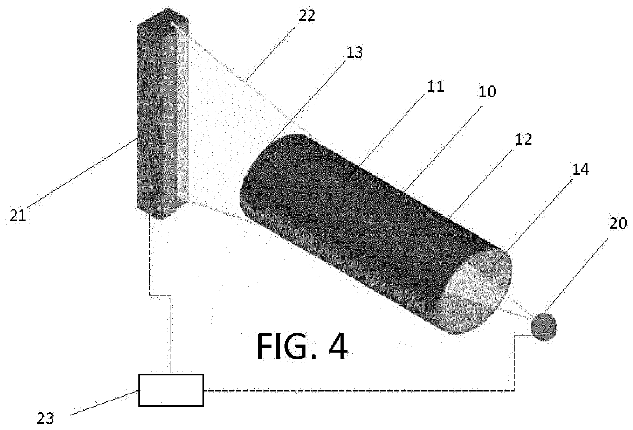

As observed in Figures 3 and 4, preferably, the X-ray emitter 20 is oriented towards the open end 14 of the container 10 and the X-ray receiver 21 is oriented towards the base 13 of the container 10. The radiation completely going through the base 13 of the container 10 is thereby assured, as well as the base 13 being close to the receiver 21 which performs the function of picking up the radiation emitted by the emitter 20 is also assured. If the radiation is emitted in the opposite direction, that is from the base 13 to the open end 14, a measurement of the thickness of the bases that is as reliable as that obtained with the arrangement of Figure 4 would not be achieved.

Even more preferably, and as observed in Figure 4, the X-ray emitter 20 emits an X-ray beam 22 having a center of focus which is aligned with the center of the base 13 of the container 10. The center of the focal point is therefore approximately aligned with the center of the base 13 of the containers 10 so that geometrical distortion as a result of conicity and other effects are symmetrical with respect to the center of the base of the containers 10.

One of the possible effects induced by the conicity of the beam 22 is the increased optical path at any point away from the center of the conical beam 22, and the centered arrangement of the beam with respect to the base minimizes this effect. Furthermore, it is important to take into consideration that the base of the container is not perfectly flat but warped/convex, so is preferable for the beam to be approximately centered in the center of the base because a double effect on the apparent thickness would otherwise occur considering the angle of the optical path and the slight angle of the base of the container.

The X-ray receiver 21 receives the X-rays after going through the base 13 of the container 10 and obtains an X-ray intensity signal which corresponds with the intensity emitted by the X-ray emitter 20 minus the intensity absorbed by the base 13 of the container 10, with said absorbed intensity being proportional to the thickness of the base of the container. The X-ray receiver 21 also allows an XR image of the base of the container to be obtained in grayscale, with said grey tones being proportional to the absorbed intensity and therefore proportional to the thickness of the base of the container.

A control unit 23 is in charge of processing the signal obtained in the X-ray receiver 21 to determine the thickness of the base 13 of the containers 10 based on the intensity of the X-rays absorbed by the base 13.

The thickness of the base 13 of the container 10 is determined by comparing the intensity of the X-rays received in the receiver 21 after going through the base 13 with a transfer function linking intensity values with thicknesses of the material of the metal containers 10, wherein the transfer function is:

$$-\text{Ln} \left[ I / I_0 \right] = \mu t$$

where:

$I_0$ is the intensity of the X-rays emitted by the X-ray emitter 20,
$I$ is the intensity of the X-rays received in the X-ray receiver 21,
$\mu$ is the absorption coefficient of the material of the base 13 of the metal container 10, and
$t$ is the thickness of the material of the base 13 of the metal container 10.

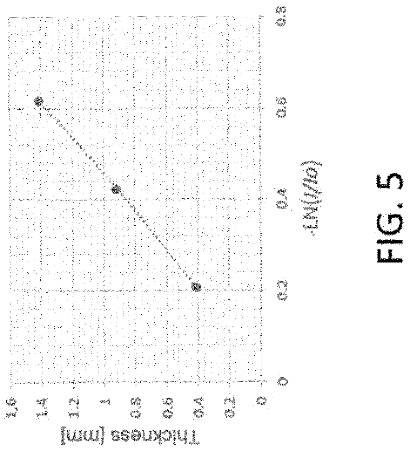

The transfer function corresponds with a standard curve as illustrated in Figure 5. Said standard curve is obtained from known thickness values of the material of the metal containers 10 and the XR transmittance of which has been previously calculated. The standard curve links thickness values with the mathematical expression indicated above: $\text{Ln} \left[ I / I_0 \right]$

To obtain the standard curve, parts that are completely flat and have a constant thickness of the metal containers 10 themselves have been used. First, the actual thickness of those parts has been determined using precision equipment and then the intensity of the rays absorbed by said parts has been determined using inspection equipment 200. Accordingly, actual thickness values of the containers 10 are obtained, and the behavior of said containers relative to the X-rays is known from each of said values, such that when a metal container 10 is inspected with the inspection unit 200 in the installation, it is possible to know its thickness using the previously calculated standard curve.

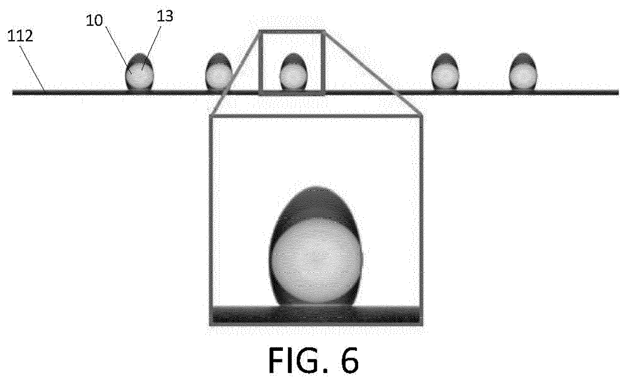

As shown in Figure 6, an XR image of each of the inspected metal containers 10 is obtained, and the XR image is made up of areas that have been previously calibrated with the standard curve for associating a thickness with each area. Specifically, each pixel of the image is associated with a thickness value that has been obtained with the standard curve. Likewise, each pixel has a grey level, said grey level being associated with a thickness value that has also been determined using the standard curve. In other words, an XR image of the base of the metal container is obtained, in which each pixel of the image is coded with a thickness value.

Additionally, the XR images allow determining the circumference of the base of the metal container, as well as detecting problems in the molecular structure of the material of the container, since any defect appearing in the XR image can be observed in a non-homogenous grey tone.

For container inspection, an inspection unit 200 with the following characteristics has been used. The X-ray emitter 20 is an Spellman brand equipment, model XRBD100PN210HR. This equipment has an emission capacity of up to 100 kV and 210 W. The range of parameters available in the equipment is 35-100 kV and 0.5-4 mA. The X-ray receiver 21 is a 14-bit, linear X-ray detector. The receiver is a Hamamatsu brand receiver, model C14300-12U, having twelve 128-pixel modules with a total reading length of 614.4 mm. The pixel size of this model is 0.4 mm.

To enable determining the thickness of the base 13 of the metal containers 10, energy and current parameters of the X-ray emitter 20 identified below have been selected.

The energy used is related to the power of penetration with respect to the material of the container and also to the response signal obtained in the receiver 21 when X-rays are received. The lower the energy is, the higher the contrast obtained in the material, but also the lower the signal obtained in the receiver. Moreover, using the lowest energy possible is recommended in terms of radio-protection. Accordingly and preferably, the X-ray emitter 20 is configured for emitting X-rays with an energy of between 35 kV and 55 kV.

Even more preferably, the X-ray emitter 20 is configured for emitting X-rays with an energy of 42 kV. Although it is true that the lower the energy used is, the higher the contrast obtained in the measured signals, in the areas of the base of the container 10 having a small thickness, the signal obtained in the X-ray receiver 21 generates a lot of noise, the energy value of 42 kV therefore being preferable to reduce the noise of the obtained signal.

Current is a parameter proportional to the emitted X-ray photon intensity. In order to obtain a better image, using the highest current possible is recommended, although in terms of radio-protection it is recommended to use the minimum necessary. Accordingly and preferably, the X-ray emitter 20 is configured for emitting X-rays with an intensity of between 3 and 4 mA. Even more preferably, the X-ray emitter 20 is configured for emitting X-rays with an intensity of 3500 $\mu$A.

**Claims**

1. Method for manufacturing and inspecting metal containers, which comprises supplying a metal disk (1), extruding the metal disk (1) to form a metal container (10) comprising a cylindrical body (11) with a side wall (12), a base (13), and an open end (14) opposite the base (13), and inspecting the metal container (10) to determine the thickness of the base (13), **characterized in that** the inspection comprises arranging the metal container (10) between an X-ray emitter (20) and an X-ray receiver (21), emitting X-rays from the X-ray emitter (20) to the X-ray receiver (21) through the base (13) of the metal container (10), part of the intensity of the X-rays being absorbed by the base (13) of the metal container (10), and determining the thickness of the base (13) of the metal container (10) based on the intensity of the X-rays absorbed by the base (13).

2. Method according to claim 1, wherein the inspection is performed after extruding the metal disk (1) when the metal container (10) is hot at a temperature comprised between 100 and 300°C.

3. Method according to claim 2, which comprises determining the adjustment parameters of an extrusion press (102) for extruding the metal disk (1) and forming the metal container (10), determining, by means of the inspection, the thickness of the base (13) of the metal container (10) extruded in the extrusion press (102), and modifying the adjustment parameters of the extrusion press (102) when the thickness (13) does not meet a given thickness value.

4. Method according to any of the preceding claims, wherein the X-ray emitter (20) is oriented towards the open end (14) of the metal container (10) and the X-ray receiver (21) is oriented towards the base (13) of the metal container (10).

5. Method according to any of the preceding claims, wherein the X-ray emitter (20) emits an X-ray beam (22) having a center of focus which is aligned with the center of the base (13) of the metal container (10).

6. Method according to any of the preceding claims, wherein the thickness of the base (13) of the metal container (10) is determined by comparing the intensity of the X-rays received in the X-ray receiver (21) after going through the base (13) with a transfer function linking intensity values with thicknesses of the material of the metal containers (10), and wherein the transfer function is:

$$-\text{Ln}\,[\,I\,/\,I_0\,]= \mu t$$

where:

$I_0$ is the intensity of the X-rays emitted by the X-ray emitter (20),
$I$ is the intensity of the X-rays received in the X-ray receiver (21),
$\mu$ is the absorption coefficient of the material of the base (13) of the metal container (10), and
$t$ is the thickness of the material of the base (13) of the metal container (10).

7. Method according to any of the preceding claims, wherein the X-ray emitter (20) is configured for emitting X-rays with an energy between 35 kV and 55 kV.

8. Method according to claim 7, wherein the X-ray emitter (20) is configured for emitting X-rays with an energy of 42 kV.

9. Method according to any of the preceding claims, wherein the X-ray emitter (20) is configured for emitting X-rays with an intensity of between 3 and 4 mA.

10. Installation for manufacturing and inspecting metal containers, comprising a feeder (101) for supplying metal disks (1), an extrusion press (102) for extruding the metal disks (1) and forming metal containers (10), wherein each metal container (10) comprises a cylindrical body (11) with a side wall (12), a base (13), and an open end (14) opposite the base (13), and an inspection unit (200) for inspecting the metal containers (10) and determining the thickness of the base (13) of the metal containers (10), **characterized in that** the inspection unit (200) comprises an X-ray emitter (20) and an X-ray receiver (21) for emitting X-rays from the X-ray emitter (20) to the X-ray receiver (21) through the base (13) of the metal containers (10), with part of the intensity of the X-rays being absorbed by the base (13) of the metal containers (10), and a control unit (23) configured for determining the thickness of the base (13) of the metal containers (10) based on the intensity of the X-rays absorbed by the base (13).

11. Installation according to claim 10, wherein the inspection unit (200) is arranged at the outlet of the extrusion press (102) wherein the metal containers (10) are hot at a temperature comprised between 100 and 300°C.

12. Installation according to claim 11, wherein the control unit (23) is further configured for determining adjustment parameters of the extrusion press (102) extruding the metal disk (1) to form the metal container (10), determining, by means of the inspection, the thickness of the base (13) of the metal container (10) extruded in the extrusion press (102), and modifying the adjustment parameters of the extrusion press (102) when the thickness (13) does not meet a given thickness value.

13. Installation according to claim 12, comprising a transfer unit (112) transferring freshly extruded metal containers (10) from the extrusion press (102) to the next machine (100) of the installation, with the transfer unit (112) being intercalated between the X-ray emitter (20) and the X-ray receiver (21).

14. Installation according to any of claims 10 to 13, wherein the X-ray emitter (20) is oriented towards the open end (14) of the metal container (10), and the X-ray receiver (21) is oriented towards the base (13) of the metal container (10).

15. Installation according to any of claims 10 to 14, wherein the X-ray emitter (20) emits an X-ray beam (22) having a center of focus which is aligned with the center of the base (13) of the metal container (10).

FIG. 1

EP 4 163 588 A1

FIG. 2

FIG. 3

EP 4 163 588 A1

FIG. 4

FIG. 5

FIG. 6

Europäisches
Patentamt

European
Patent Office

Office européen
des brevets

# EUROPEAN SEARCH REPORT

Application Number

EP 21 38 2907

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | EP 3 404 357 A1 (TECH PRO PACKAG S L [ES]; INGENET AUTOMATIZACION S L [ES]) 21 November 2018 (2018-11-21) * abstract * * figures 1-3 * * paragraphs [0014], [0021] - [0032] * * paragraph [0040] * | 1-15 | INV. G01B15/02 B29C48/92 |
| Y | WO 91/19164 A1 (INT DIGITAL MODELING CORP [US]) 12 December 1991 (1991-12-12) * abstract * * page 10, lines 4-17 * * page 10, line 32 - page 11, line 2 * * page 17, lines 6-26 * * page 22, lines 6-21 * * page 28, line 22 - page 29, line 1 * * page 4, l. 35-37, page 5, l. 36 to page 6, l. 10, page 31, l. 23 to page 32, l. 16, page 34, l. 7-15 * | 1-15 | |
| Y | CN 111 906 151 A (CHALCO RUIMIN CO LTD) 10 November 2020 (2020-11-10) * abstract * * paragraphs [0003] - [0035] * * figure 1 * | 1-15 | TECHNICAL FIELDS SEARCHED (IPC) G01B G01N B29C |
| Y | US 2004/234027 A1 (OLESEN FINN FALLENTIN [DK] ET AL) 25 November 2004 (2004-11-25) * abstract * * paragraphs [0002], [0021] - [0037] * * figures 1,3,7,8 * | 1,6,10 | |
| Y | US 2014/183365 A1 (KYRIAKIS JOHN [GB]) 3 July 2014 (2014-07-03) * abstract * * paragraphs [0002] - [0013] * | 1,10 | |

The present search report has been drawn up for all claims

| Place of search | Date of completion of the search | Examiner |
|---|---|---|
| Munich | 11 March 2022 | Poizat, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 163 588 A1

### ANNEX TO THE EUROPEAN SEARCH REPORT
### ON EUROPEAN PATENT APPLICATION NO.

EP 21 38 2907

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2022

| Patent document cited in search report | | Publication date | Patent family member(s) | | Publication date |
|---|---|---|---|---|---|
| EP 3404357 | A1 | 21-11-2018 | NONE | | |
| WO 9119164 | A1 | 12-12-1991 | AU | 8085391 A | 31-12-1991 |
| | | | CA | 2064572 A1 | 12-12-1991 |
| | | | DE | 69112773 T2 | 13-06-1996 |
| | | | DE | 69132335 T2 | 01-02-2001 |
| | | | EP | 0485572 A1 | 20-05-1992 |
| | | | EP | 0664437 A2 | 26-07-1995 |
| | | | ES | 2078527 T3 | 16-12-1995 |
| | | | JP | H05502301 A | 22-04-1993 |
| | | | US | 5379237 A | 03-01-1995 |
| | | | US | 5608660 A | 04-03-1997 |
| | | | WO | 9119164 A1 | 12-12-1991 |
| CN 111906151 | A | 10-11-2020 | NONE | | |
| US 2004234027 | A1 | 25-11-2004 | DK | 175850 B1 | 29-03-2005 |
| | | | EP | 1381826 A1 | 21-01-2004 |
| | | | US | 2004234027 A1 | 25-11-2004 |
| | | | WO | 02086421 A1 | 31-10-2002 |
| US 2014183365 | A1 | 03-07-2014 | CN | 103909646 A | 09-07-2014 |
| | | | EP | 2752287 A1 | 09-07-2014 |
| | | | US | 2014183365 A1 | 03-07-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3404357 A1